Europäisches Patentamt

European Patent Office

Office européen des brevets

(11) Veröffentlichungsnummer: **0 022 525 B1**

(12) ## EUROPÄISCHE PATENTSCHRIFT

(45) Veröffentlichungstag der Patentschrift:
11.07.84

(51) Int. Cl.³: **C 02 F 1/72, C 02 F 9/00**

(21) Anmeldenummer: 80103814.2

(22) Anmeldetag: 04.07.80

(54) **Verfahren zur Abwasserbehandlung.**

(30) Priorität: 11.07.79 DE 2927911

(43) Veröffentlichungstag der Anmeldung:
21.01.81 Patentblatt 81/3

(45) Bekanntmachung des Hinweises auf die Patenterteilung:
11.07.84 Patentblatt 84/28

(84) Benannte Vertragsstaaten:
**DE FR GB IT**

(56) Entgegenhaltungen:
**DE - A - 2 703 268**
**DE - A - 2 835 496**
**FR - A - 2 271 179**

(73) Patentinhaber: **BAYER AG, Konzernverwaltung RP Patentabteilung, D-5090 Leverkusen 1 Bayerwerk (DE)**

(72) Erfinder: **Wilms, Klaus Günter, Dr., Siegstrasse 3, D-4047 Dormagen 1 (DE)**
Erfinder: **Waldmann, Helmut, Dr., Carl-Rumpff-Strasse 59, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Bei einigen Prozessen fallen Abwässer an, die mit dem üblichen Methoden der Belebtschlammbehandlung biologisch nicht abbaubar sind bzw. deren Inhaltsstoffe in biologischen Kläranlagen häufig Probleme bewirken, da sich der Belebtschlamm nicht rasch genug an die verschiedenen Chemikalien im Abwasser anpassen kann. Dies gilt insbesondere bei diskontinuierlichem Anfall solcher Abwässer. Auch bei nichttoxischen Inhaltsstoffen werden Anpassungsschwierigkeiten durch zeitliche und mengenmässige Schwankungen des anfallenden Abwassers beobachtet.

Es ist bekannt, Wasserstoffperoxid als Oxidationsmittel zur Abwasserreinigung in Gegenwart von Übergangsmetallverbindungen einzusetzen. So wird in der japanischen Patentanmeldung 51-132057 vorgeschlagen, dem Abwasser, bezogen auf den CSB-Behalt des Abwassers, die theoretisch zur Totaloxidation notwendige Menge Wasserstoffperoxid zuzusetzen. Der Einsatz einer dem CSB-Gehalt der Abwasser stöchiometrisch äquivalenten Wasserstoffperoxidmenge erbringt aber nur eine CSB-Senkung im Abwasser und ein Restgehalt an CSB bleibt übrig, da das eingesetzte Wasserstoffperoxid nicht zu 100% zur CSB-Senkung ausgenutzt wird.

Um eine weitergehende CSB-Senkung zu erzielen, kann die zugegebene Wasserstoffperoxidmenge erhöht werden. So wird beispielsweise in der japanischen Patentanmeldung 51-136947 eine Wasserstoffperoxidzugabe vorgeschlagen, die über der zweifachen Menge liegt, die nach dem CSB-Gehalt der Abwässer theoretisch zur Totaloxidation benötigt wird. Diese Erhöhung der Wasserstoffperoxidzugabe stellt zwar eine Möglichkeit zur Verminderung des CSB-Gehaltes dar, im Abwasser verbleibt jedoch immer noch ein Restgehalt an CSB, und die Wasserstoffperoxidausnutzung ist in diesem Fall kleiner als 50%.

In der japanischen Patentanmeldung 53-063760 wird vorgeschlagen, während der Umsetzung der Abwässer mit Wasserstoffperoxid in Gegenwart von Übergangsmetallverbindungen gleichzeitig Sauerstoff einzuleiten, da sonst keine Verminderung des CSB-Gehaltes erreicht werden kann.

Mit den vorgeschlagenen Verfahren kann das eingesetzte, teure Wasserstoffperoxid jedoch nie vollständig ausgenutzt werden, teilweise muss ausserdem noch Sauerstoff in das zu behandelnde Abwasser eingeleitet werden, und in allen Fällen treten bei der nachgeschalteten Abwasserreinigung nach dem Belebtschlammverfahren Betriebsstörungen auf.

Gemäss DE-A-2 271 179 wurde vorgeschlagen, die beim Zelluloseaufschluss nach dem Sulfit-Verfahren anfallende Ablauge dadurch aufzubereiten, dass bei der Fällung der Ligninsulfonsäuren als basische Erdalkalisalze geringe Mengen $H_2O_2$ zugegeben werden.

Gemäss DE-A-2 703 268 wurde vorgeschlagen, Phenol- und/oder Formaldehyd-haltige Abwässer durch Oxidation mit $H_2O_2$ für einen anschliessenden biologischen Abbau vorzubehandeln. Dabei soll die Vorbehandlung in Gegenwart von metallischem Eisen oder Kupfer gegebenenfalls unter Zugabe von Aktivatoren erfolgen. Jedoch kann das so vorbehandelte Abwasser nicht ohne weitere Verdünnung einer biologischen Kläranlage zugeführt werden.

Demgegenüber wurde nun gefunden, dass man den CSB-Gehalt von Abwässern mit Wasserstoffperoxid in Gegenwart von Übergangsmetallverbindungen ohne Nachteile für ein nachgeschaltetes biologisches Abwasserreinigungsverfahren senken kann, wenn man die Abwässer bezogen auf ihren CSB-Gehalt mit einem berechneten Unterschuss von Wasserstoffperoxid behandelt.

Gegenstand der vorliegenden Erfindung ist daher ein Verfahren zur Verminderung des CSB-Gehaltes von Abwässern durch Behandlung mit Wasserstoffperoxid in Gegenwart von Übergangsmetallverbindungen, welches dadurch gekennzeichnet ist, dass dem Abwasser 50 bis 65% der berechneten, zur Totaloxidation des Gesamt-CBS-Gehaltes des Abwassers benötigten Menge an $H_2O_2$ zugesetzt, während der Behandlung eine Temperatur von 5 bis 100 °C aufrecht erhalten, im Abwasser ein Ausgangs-pH-Wert von 2,0 bis 9,0 eingestellt und dem Abwasser eine solche Menge wasserlöslicher Eisenverbindungen, dass das Molverhältnis von zugesetztem $H_2O_2$ zu gelösten Eisenverbindungen im Abwasser mindestens 3 : 1 beträgt, zugegeben und anschliessend nach einer Flockulationsbehandlung das Geflockte, gegebenenfalls nach Zugabe basischer Stoffe, abgetrennt wird.

Mit der vorliegenden Erfindung können biologisch nicht oder nur schwer abbaubare Abwasserinhaltsstoffe überraschenderweise in biologisch abbaubare Stoffe überführt werden, d.h. nach der erfindungsgemässen Wasserstoffperoxidbehandlung in Gegenwart von Eisenverbindungen ist der verbleibende CSB-Gehalt des Abwassers biologisch abbaubar.

Bei dem anfallenden Abwasser, das sowohl kontinuierlich als auch diskontinuierlich behandelt werden kann, wird zunächst analytisch der CSB-Gehalt festgestellt. Das Abwasser wird dann auf eine Temperatur zwischen ca. 5 bis 100 °C, vorzugsweise 20 bis 45 °C, besonders bevorzugt 25 bis 34 °C, gebracht. Der pH-Wert des Abwassers wird auf Werte zwischen ca. 2,0 bis 9,0, vorzugsweise 3,5 bis 6,5, ganz besonders bevorzugt 4,0 bis 5,0 eingestellt.

Das Abwasser wird nun mit Wasserstoffperoxid in einer Menge von 50 bis 65% des theoretisch zur Totaloxidation des CSB-Gehaltes notwendigen Menge behandelt. Vorzugsweise werden 55 bis 63%, besonders bevorzugt 57 bis 62% der berechneten Menge an $H_2O_2$ zugesetzt. Überraschenderweise wird bei dieser Behandlung das zugesetzte Wasserstoffperoxid vollständig zum Abbau des CSB-Gehaltes ausgenutzt, während bei bezogen auf den CSB-Gehalt stöchiometrischer bzw. überstöchiometrischer Wasserstoffperoxiddosierung ein Grossteil des Wasserstoffperoxids nicht zur CSB-Verminderung beiträgt.

Die Zersetzung des Wasserstoffperoxids wird mit löslichen bzw. zumindest teilweise löslichen Eisenverbindungen vorgenommen. Als Eisenverbindungen werden zumindest teilweise löslich sowohl (Eisen(II)- und/oder Eisen(III)-Verbindungen eingesetzt. Als Eisenverbindungen können auch sowohl oxidische als auch sulfidische Erze, wie Magnet-, Rot- und Brauneisenstein oder Eisenkies eingesetzt werden. In vielen Fällen werden Eisen(III)-Verbindungen wie $Fe(OH)_3$, $Fe_2O_3$, $FeCl_3$ und/oder $Fe_2(SO_4)_3$ als Katalysator gewählt. Vorzugsweise werden Eisen(II)-Verbindungen wie FeO, $Fe(OH)_2$, $FeCl_2$, $FeCO_3$, ganz besonders bevorzugt $FeSO_4 \cdot 7H_2O$, bzw. sogenanntes Grünsalz aus der Titandioxidherstellung, als Katalysator eingesetzt.

Das einzustellende Molverhältnis von Wasserstoffperoxid zu Eisenverbindungen richtet sich nach der Art und der Konzentration der Abwasserinhaltsstoffe, der Reaktionstemperatur und dem angestrebten Flockungseffekt bei der nachfolgenden Neutralisation. Bei leicht oxidierbarem Abwasser und einem Temperaturbereich von beispielsweise 20 bis 35°C wird bei einem Molverhältnis von Wasserstoffperoxid zu Eisenverbindungen von 30 : 1 bis 3 : 1, vorzugsweise von 20 : 1 bis 10 : 1, ganz besonders bevorzugt von 18 : 1 bis 13 : 1 gearbeitet. Bei höheren Temperaturen reichen auch geringere Mengen von Eisenverbindungen aus, beispielsweise kann bei dem gleichen Abwasser jedoch bei Temperaturbereich von 40 bis 60°C bei einem Molverhältnis von Wasserstoffperoxid zu Eisenverbindungen im Verhältnis von 100 : 1 bis 60 : 1 gearbeitet werden. Bei noch höheren Temperaturen nimmt das Molverhältnis entsprechend noch weiter zu. Demgegenüber erfordern jedoch Abwasserinhaltsstoffe, die Eisenverbindungen komplexieren oder selbst unter gewöhnlichen Bedingungen nur schwer zu oxidieren sind, wie z.B. Phosphate, Phosphorsäurederivate und N-Heterocyclen-Eisendosierungen im Molverhältnis Wasserstoffperoxid zu Eisenverbindungen von bis zu 3 : 1.

Die Reaktionsführung bei der vorliegenden Erfindung kann sowohl isotherm als auch adiabatisch erfolgen. Erfindungsgemäss wird in einem Temperaturbereich von ca. 100°C, vorzugsweise ca. 20 bis 45°C, ganz besonders bevorzugt bei ca. 25 bis 35°C gearbeitet. In Spezialfällen kann sowohl bei isothermer als auch adiabatischer Reaktionsführung der angegebene Temperaturbereich noch unter- oder überschritten werden, wobei unter Umständen auch unter erhöhtem oder vermindertem Druck gearbeitet werden kann.

Nach der Behandlung des Abwassers mit Wasserstoffperoxid in Gegenwart von Eisenverbindungen, wird das behandelte Abwasser biologisch weiterbehandelt oder auch in Ausnahmefällen anderweitig abgegeben. Das Abwasser ist mehr oder weniger sauer und muss entsprechend auf den für die biologische Behandlung notwendigen pH-Wert eingestellt werden. Dieser Teilschritt des erfindungsgemässen Verfahrens wird mit basisch reagierenden Stoffen, also beispielsweise Kaliumhydroxid, Natriumhydroxid, vorzugsweise jedoch Kalziumverbindungen, wie z.B. Kalziumoxid, Kalziumhydroxid und/oder Kalziumcarbonat, besonders bevorzugt mit Kalkmilch durchgeführt. Hierbei werden die im Abwasser vorhandenen Eisenionen als Hydroxide gefällt und dadurch eine Flockulationsadsorption bewirkt. Die in seltenen Fällen schon vorher geflockten bzw., schon bei der Zugabe von basischen Stoffen geflockten und gefällten Stoffe werden abgetrennt, vorzugsweise durch Filtration, Sedimentation, Flotation oder Zentrifugieren.

Überraschenderweise lässt sich mit den erfindungsgemässen Massnahmen eine höhere CSB-Verminderung des Abwassers erreichen als sich aufgrund des CSB-Abbaus durch separate Wasserstoffperoxidbehandlung und Flockulationsadsorption erzielen lässt. Mit anderen Worten, die erfindungsgemässe Abwasserbehandlung mit einer, bezogen auf die zur theoretischen Totaloxidation des gesamten CSB-Gehaltes, unterstöchiometrischen Menge an Wasserstoffperoxid und darauffolgender Flockulationsadsorption ergibt nicht nur den additiven Wert für die CSB-Verminderung aus beiden Teilschritten, sondern einen weit höheren Wert.

Mit dem erfindungsgemässen Verfahren erhält man also nicht nur biologisch abbaubare Produkte und eine praktisch quantitative Wasserstoffperoxidnutzung, sondern auch einen höher als berechneten Abbau des CSB-Gehaltes des Abwassers.

Das erfindungsgemässe Verfahren soll an Hand der folgenden Beispiele noch näher erläutert werden.

Beispiel 1

Ein Abwasser aus der Produktion von Buchstabensäuren enthielt u.a. folgende Inhaltsstoffe:
250–300 mg/l G-Säure
400–500 mg/l H-Säure
300–400 mg/l R-Säure
150–200 mg/l Naphthol-1-sulfonsäure-4

Die CSB-, $BSB_5$- und pH-Werte des Abwassers waren:

CSB:    1490 mg/l
TOC:    495 mg/l
$BSB_5$:    270 mg/l
pH:    1,5

Die Schadwirkung dieses Abwassers gegen Pseudomonas fluorescens lag bis zur Verdünnung 1 : 17 vor, gegen Leuciscus idus bei 1 : 100.

Das oben charakterisierte Abwasser wurde folgender chemisch-biologischer Behandlung unterworfen (Angaben immer bezogen auf 1 l Abwasser):
1. Zugabe von 1,05 g $FeSO_4 \cdot 7 H_2O$
2. pH-Einstellung mit Kalkmilch auf pH = 4,5
3. Zugabe von 3,80 g 50%igem $H_2O_2$.

Bei ca. 25°C wurde 1 h lang gerührt. Dann wurden der CSB- und TOC-Gehalt des so behandelten Abwassers bestimmt:
CSB:    595 mg/l
TOC:    307 mg/l

Danach wurde das behandelte Abwasser mit Kalkmilch auf pH = 8.0 gestellt. Nach Abtrennung des Geflockten und der ausgefällten Bestandteile wies das Abwasser folgende Werte auf:

CSB: 208 mg/l
TOC: 114 mg/l
BSB$_5$: 90 mg/l

Es lag keine Schadwirkung gegen Pseudomonas fluorescens und Leuciscus idus mehr vor. Dieses Abwasser wurde anschliessend einer Behandlung nach dem Belebtschlammverfahren unterzogen.

Beispiel 2

Ein Abwasser aus der Produktion von Dichlorphenolen enthielt u.a. folgende Inhaltsstoffe:

100–200 mg/l 2,4-Dichlorphenol
100–200 mg/l 2,6-Dichlorphenol

Die CSB-, TOC-, BSB$_5$- und pH-Werte des Abwassers waren:

CSB: 530 mg/l
TOC: 200 mg/l
BSB$_5$: 75 mg/l
pH: 0,1

Die Schadwirkung dieses Abwassers gegen Pseudomonas fluorescens lag bis zur Verdünnung 1 : 32 vor, gegen Leuciscus idus bei 1 : 700.

Das oben charakterisierte Abwasser wurde folgender chemischer Behandlung unterworfen (Angaben immer bezogen auf 1 l Abwasser):

1. Zugabe von 0,307 g FeSO$_4$ · 7 H$_2$O
2. pH-Einstellung mit Kalkmilch auf pH = 4
3. Zugabe von 1,877 g 30%igem H$_2$O$_2$

Bei 30 °C wurde 2 h lang gerührt. Dann wurden der CSB- und TOC-Gehalt des so behandelten Abwassers bestimmt:

CSB: 265 mg/l
TOC: 134 mg/l

Danach wurde das behandelte Abwasser mit Kalkmilch auf pH = 7,5 gestellt. Nach Abtrennung des Geflockten und der ausgefällten Bestandteile wies das Abwasser folgende Werte auf:

CSB: 141 mg/l
TOC: 86 mg/l
BSB$_5$: 67 mg/l

Es lag keine Schadwirkung gegen Pseudomonas fluorescens und Leuciscus idus mehr vor. Dieses neutralisierte Abwasser wurde noch einer nachfolgenden Behandlung nach dem Belebtschlammverfahren unterzogen.

Beispiel 3

Ein Mischabwasser aus dem Bereich organischer Produktionen enthielt u.a. je 50–300 mg/l folgender Verbindungen:

Chlorbenzol, o-Chlorphenol,
2,4- und 2,6-Dichlorphenol,
2,4,6-Trichlorphenol, m-Nitrophenol,
N-Methylanilin, N,N-Diethylanilin,
Pyridin, α-Picolin. o-Nitroanilin,
Anilin-2-sulfonsäure,
2-Aminophenol-4-sulfonsäure,
1-Naphthalinsulfonsäure,
2-Naphthalinsulfonsäure,
H-Säure, R-Säure, Kristallviolett,
Methylrot, Anthracen-1-sulfonsäure,
Anthrachinon-1,5-disulfonsäure.

4,5-Dichlor-anthrachinon-1,8-disulfonsäure,
5-Nitro-anthrachinon-1-sulfonsäure,
1-Amino-anthrachinon-2-sulfonsäure,
8-Amino-anthrachinon-1-sulfonsäure,
1,5-Dihydroxy-anthrachinon-2,6-disulfonsäure, 4,5-Diamino-1,8-dihydroxy-anthrachinon-2,7-disulfonsäure,
Alkylphenolpolyglykolether,
Lauryl-schwefelsäure, 5-[(4-Aminophenyl)-azo/-2-hydroxybenzoesäure,
5-] [(4-Aminobenzoyl)-amino/-phenyl)-azo]-2-hydroxybenzoesäure,
4-[(4-Amino-1-naphthyl)-azo]-benzolsulfonsäure.

Die CSB-, TOC-, BSB$_5$- und pH-Werte des Abwassers waren:

CSB: 1357,0 mg/l
TOC: 489,0 mg/l
BSB$_5$: 173,0 mg/l
pH: 3,5

Die Schadwirkung dieses Abwassers gegen Pseudomonas fluorescens lag bis zur Verdünnung 1 : 17 vor, gegen Leuciscus idus bei 1 : 400.

Das oben charakterisierte Abwasser wurde folgender chemischer Behandlung unterworfen (Angaben immer bezogen auf 1 l Abwasser):

1. Zugabe von 0,959 g FeSO$_4$ · 7 H$_2$O
2. pH-Einstellung mit Natronlauge auf pH = 4,0
3. Zugabe von 3,5 g 50%igem H$_2$O$_2$

Bei 20 °C wurde 4 h lang gerührt. Dann wurden der CSB- und TOC-Gehalt des so behandelten Abwassers bestimmt:

CSB: 533 mg/l
TOC: 294 mg/l

Danach wurde das behandelte Abwasser mit Kalkmich auf pH = 8,5 gestellt. Nach Abtrennung des Geflockten und der ausgefällten Bestanteile wies das Abwasser folgende Werte auf:

CSB: 325 mg/l
TOC: 189 mg/l
BSB$_5$: 150 mg/l

Es lag keine Schadwirkung mehr vor gegen Pseudomonas fluorescens und Leuciscus idus.

Dieses neutralisierte Abwasser wurde anschliessend einer Behandlung nach dem Belebtschlammverfahren unterzogen.

Beispiel 4

Ein Mischabwasser aus der Produktion von organischen Zwischenprodukten wies folgende CSB-, BSB$_5$- und pH-Werte auf:

CSB: 8600 mg/l
BSB$_5$: 350 mg/l
pH: 1,5

Die Schadwirkung dieses Abwassers gegen Pseudomonas fluorescens lag bis zur Verdünnung 1 : 64, gegen Leuciscus idus bei 1 : 250 vor.

Das oben charakterisierte Abwasser wurde jeweils

a) einer Wasserstoffperoxid-Oxidation in Gegenwart jeweils gleicher Mengen Eisen(II)-sulfat,

b) einer Flockung und Fällung mit FeSO$_4$ · 7 H$_2$O als Flockungsmittel und

c) einer Kombination von Wasserstoffperoxid-Behandlung gemäss a) mit sich anschliessender Flockung und Fällung gemäss b) unterzogen (Angaben immer bezogen auf 1 l Abwasser).

a) Wasserstoffperoxid-Oxidation
1. Zugabe von 6,0 g $FeSO_4 \cdot 7 H_2O$
2. pH-Einstellung mit Kalkmilch auf pH = 4,0
3. Zugabe von 21,9 g 50%igem $H_2O_2$

Bei ca. 25°C wurde 1 h lang gerührt. Der CSB des so behandelten Abwasser war CSB 3440 mg/l.

b) Flockung und Fällung
1. Zugabe von 6,0 g $FeSO_4 \cdot 7 H_2O$
2. 15 Minuten Rühren bei ca. 25°C
3. Neutralisation mit Kalkmilch auf pH = 7,5
4. Abtrennung des Sediments und Einstellung desselben mit Kalkmilch auf pH = 11
5. Filtration.

Der CSB der vereinigten Filtrate war CSB 7131 mg/l.

c) erfindungsgemässe Kombination von Wasserstoffperoxid-Behandlung und Flockung und Fällung
1. Zugabe von 6,0 g $FeSO_4 \cdot 7 H_2O$
2. pH-Einstellung mit Kalkmilch auf pH = 4,0
3. Zugabe von 21,9 g 50%igem $H_2O_2$
4. 60 Minuten Rühren bei ca. 25°C
5. Neutralisation mit Kalkmilch auf pH = 7,5
6. Abtrennung des Sediments und Einstellung desselben mit Kalkmilch auf pH = 11
7. Filtration.

Der CSB vereinigten Filtrate war CSB 1598 mg/l.

Beispiel 5

Ein Mischabwasser aus der Produktion von organischen Zwischenprodukten wies folgende CSB-, $BSB_5$- und pH-Werte auf:

CSB:      89 000 mg/l
$BSB_5$:      3650 mg/l
pH:        0,1

Die Schadwirkung dieses Abwassers gegen Pseudomonas fluorescens lag bis zur Verdünnung 1 : 140, gegen Leuciscus idus bei 1 : 350 vor.

Das oben charakterisierte Abwasser wurde jeweils

a) einer Wasserstoffperoxid-Oxidation in Gegenwart jeweils gleicher Mengen Eisen(II)-sulfat,

b) einer Flockung und Fällung mit $FeSO_4 \cdot 7 H_2O$ als Flockungsmittel und

c) einer Kombination von Wasserstoffperoxid-Behandlung gemäss a) mit sich anschliessender Flockung und Fällung gemäss b) unterzogen (Angaben immer bezogen auf 1 l Abwasser).

a) Wasserstoffperoxid-Oxidation
1. Zugabe von 56,7 g $FeSO_4 \cdot 7 H_2O$
2. pH-Einstellung mit Kalkmilch auf pH = 4,0
3. Zugabe von 209,0 g 50%igem $H_2O_2$

Bei ca. 25°C wurde 1 h lang gerührt. Der CSB des so behandelten Abwassers war CSB 39 827 mg/l.

b) Flockung und Fällung
1. Zugabe von 56,7 g $FeSO_4 \cdot 7 H_2O$
2. 15 Minuten Rühren bei ca. 25°C
3. Neutralisation mit Kalkmilch auf pH = 7,5
4. Abtrennung des Sediments und Einstellung desselben mit Kalkmilch auf pH = 11
5. Filtration.

Der CSB der vereinigten Filtrate war CSB 67 234 mg/l.

c) erfindungsgemässe Kombination von WasserstoffperoxidBehandlung und Flockung und Fällung
1. Zugabe von 56,7 g $FeSO_4 \cdot 7 H_2O$
2. pH-Einstellung mit Kalkmilch auf pH = 4,0
3. Zugabe von 209,0 g 50%igem $H_2O_2$
4. 60 Minuten Rühren bei ca. 25°C
5. Neutralisation mit Kalkmilch auf pH = 7,5
6. Abtrennung des Sediments auf Einstellung desselben mit Kalkmilch auf pH = 11
7. Filtration.

Der CSB der vereinigten Filtrate war CSB 9670 mg/l.

**Patentansprüche**

1. Verfahren zur Verminderung des CSB-Gehaltes von Abwässern durch Behandlung mit Wasserstoffperoxid in Gegenwart von Übergangsmetallverbindungen, dadurch gekennzeichnet, dass dem Abwasser 50 bis 65% der berechneten, zur Totaloxidation des Gesamt-CSB-Gehaltes des Abwassers benötigten Menge an $H_2O_2$ zugesetzt, während der Behandlung eine Temperatur von 5 bis 100°C aufrechterhalten, im Abwasser ein Ausgangs-pH-Wert von 2,0 bis 9,0 eingestellt und dem Abwasser eine solche Menge wasserlöslicher Eisenverbindungen, dass das Molverhältnis von zugesetztem $H_2O_2$ zu gelösten Eisenverbindungen im Abwasser mindestens 3 : 1 beträgt, zugegeben und anschliessend nach einer Flockulationsadsorption das Geflockte, gegebenenfalls nach Zugabe basischer Stoffe, abgetrennt wird.

2. Verfahren nach Anspruch 1, dadurch gekennzeichnet, dass der Ausgangs-pH-Wert auf Werte zwischen 3,5 bis 6,5, vorzugsweise zwischen 4,0 bis 5,0 eingestellt wird.

3. Verfahren nach Anspruch 1 oder 2, dadurch gekennzeichnet, dass dem Abwasser 55 bis 63%, vorzugsweise 57 bis 62% der berechneten, zur Totaloxidation des Gesamt-CSB-Gehaltes des Abwassers benötigten Menge an $H_2O_2$ zugesetzt wird.

4. Verfahren nach einem der Ansprüche 1 bis 3, dadurch gekennzeichnet, dass eine solche Menge von Eisenverbindungen zugesetzt wird, dass das Molverhältnis von zugesetztem Wasserstoffperoxid zu Eisenverbindungen im Abwasser 30 : 1 bis 3 : 1, vorzugsweise 20 : 1 bis 10 : 1, besonders bevorzugt 18 : 1 bis 13 : 1 beträgt.

**Claims**

1. Process for decreasing the COD content of effluents by treatment with hydrogen peroxide in the presence of transition metal compounds, characterised in that 50 to 65% of the calculated quantity of $H_2O_2$ required for the total oxidation of the total COD content of the effluent is added to the effluent, a temperature of 5 to 100°C is maintained during the treatment, a starting pH value of 2.0 to 9.0 is adjusted in the effluent and such a quantity of water-soluble iron compounds is added to the effluent that the molar ratio of the added $H_2O_2$ to the dissolved iron compounds in the effluent is at least 3 : 1 and then, after a flocculation adsorption, the flocculated material is separated, optionally after the addition of basic substances.

2. Process according to Claim 1, characterised in that the starting pH value is adjusted to values between 3.5 and 6.5, and preferably between 4.0 and 5.0.

3. Process according to Claim 1 or 2, characterised in that 55 to 63%, preferably 57 to 62% of the calculated quantity of $H_2O_2$ required for the total oxidation of the total COD content of the effluent, is added to the effluent.

4. Process according to one of Claims 1 to 3, caracterised in that such a quantity of iron compounds is added that the molar ratio of the added hydrogen peroxide to the iron compounds in the effluent is 30 : 1 to 3 : 1, preferably 20 : 1 to 10 : 1, and particularly preferably 18 : 1 to 13 : 1.

**Revendications**

1. Procédé pour diminuer la DCO d'eaux résiduaires par traitement à l'aide du peroxyde d'hydrogène en présence de composés de métaux de transition, caractérisé en ce que l'on ajoute aux eaux résiduaires de 50 à 65% de la quantité de $H_2O_2$ nécessaire théoriquement pour l'oxydation totale de la DCO totale des eaux résiduaires, en maintenant au cours du traitement une température de 5 à 100 °C, en réglant dans les eaux résiduaires un pH initial de 2,0 à 9,0 et en ajoutant aux eaux résiduaires une quantité de composés hydrosolubles du fer telle que le rapport molaire entre le $H_2O_2$ ajouté et les composés du fer dissous dans les eaux résiduaires soit d'au moins 2 : 1, et après une adsorption-floculation, on sépare le floculat, éventuellement après addition de substances basiques.

2. Procédé selon la revendication 1, caractérisé en ce que l'on règle le pH initial à des valeurs de 3,5 à 6,5, de préférence de 4,0 à 5,0.

3. Procédé selon la revendication 1 ou 2, caractérisé en ce que l'on ajoute aux eaux résiduaires de 55 à 63%, de préférence de 57 à 62%, de la quantité de $H_2O_2$ nécessaire théoriquement pour l'oxydation totale de la DCO totale des eaux résiduaires.

4. Procédé selon l'une des revendications 1 à 3, caractérisé en ce que l'on ajoute les composés du fer en quantités telles que le rapport molaire entre le peroxyde l'hydrogène ajouté et les composés du fer dans les eaux résiduaires soit de 30 : 1 à 3 : 1, de préférence de 20 : 1 à 10 : 1 et mieux encore de 18 : 1 à 13 : 1.